# EUROPÄISCHE PATENTSCHRIFT

(11) **EP 2 159 430 B1**
(45) Veröffentlichungstag und Bekanntmachung des Hinweises auf die Patenterteilung: **07.12.2011**
(21) Anmeldenummer: 09168615.4
(22) Anmeldetag: 25.08.2009
(51) Int. Cl.: F16B 5/02, F16B 33/00

(54) **Verbindung zwischen einem Profil und einer Aussenwand**
Connection between a profile and an exterior wall
Liaison entre un profil et une paroi extérieure

(30) Priorität: 02.09.2008 DE 102008045412
(43) Veröffentlichungstag der Anmeldung: 03.03.2010
(73) Patentinhaber: SFS intec Holding AG, 9435 Heerbrugg (CH)
(72) Erfinder: Mallebay, Lionel, 26120, Montelier (FR)

(56) Entgegenhaltungen:
- US-A- 5 304 023
- US-A- 5 433 570

## Beschreibung

Die Erfindung betrifft eine Verbindung zwischen einem Profil, das eine Schwelle, ein Türrahmenteil oder ein Fensterrahmenteil ist, und einer Außenwand in einer Öffnung an einem Gebäude, bestehend aus mindestens einer Schraube mit einem Verankerungsgewinde und einer unter dem Kopf um einen gewindefreien Schaftabschnitt angeordneten Dichtscheibe und mindestens je einer Bohrung in dem Profil und der Außenwand, in die die Schraube eingedreht ist, wobei die Schraube zusätzlich ein Stützgewinde am Schaft unter dem Schraubenkopf aufweist, wobei die Dichtscheibe eine konische Dichtscheibe aus einem Metallrücken und einer an dessen Unterseite angebrachten Elastomerschicht ist, und wobei die axiale Länge des gewindefreien Schaftabschnittes nicht größer ist als die von der Dichtscheibe eingenommene Länge des Schaftes.

Aus der US 5 433 570 A ist eine ähnliche Schraube bekannt, die aber zur Befestigung eines Sandwich-Elements auf einem festen Unterbau dient. Ein solches Sandwich-Element besteht in der Regel aus einer äußeren Deckplatte, einer innenliegenden Deckplatte sowie einer dazwischenliegenden Isolierung. Die unter dem Schraubenkopf angeordnete konische Dichtscheibe aus einem Metallrücken und einer an dessen Unterseite angebrachten Elastomerschicht sorgt für eine ausreichende Abdichtung, so dass in die Bohrung in der äußeren Deckplatte üblicherweise kein Wasser eindringen kann. Für diesen Zweck ist die Elastomerschicht am inneren Umfang der Dichtscheibe mit einer vorstehenden Dichtlippe versehen, die sicherstellt, dass auch am Schaft kein Wasser in das Innere des Sandwich-Elements gelangt. Beim Anziehen der Schraube bildet die Dichtscheibe somit eine innere Abdichtung am Schraubenschaft und eine äußere Abdichtung an der Stelle, wo sie Bewegungen der äußeren Deckplatte des Sandwich-Elements aufnehmen muss, die auf Temperaturausdehnungen und Verkehrslasten des Bauwerks zurückzuführen sind. Nach Kenntnis der Anmelderin ist eine solche Schraube bei einer Verbindung zwischen einem Profil, das eine Schwelle, ein Türrahmenteil oder ein Fensterrahmenteil ist, und einer Außenwand in einer Öffnung an einem Gebäude bislang noch nicht eingesetzt worden. Für eine solche Verbindung wird nämlich diese bekannte Schraube als nicht geeignet angesehen, weil das auf dem Stützgewinde aufliegende Profil sich im Einsatz bewegt, sei es durch eine Auf- und Abbewegung der Dichtscheibe, weil eine Schwelle oder ein Türrahmenteil begangen wird, oder sei es aufgrund von Schwingungen des Gebäudes oder des Profils bei üblichen Verkehrslasten wie Windeinwirkungen usw. Versuche der Anmelderin haben gezeigt, dass in solchen Einsatzfällen das Eindringen von Wasser im Bereich einer solchen Schraube auf Dauer nicht verhindert werden kann. Gewährleistet ist das nur bei dem von Haus aus vorgesehenen Einsatzzweck dieser bekannten Schraube, nämlich bei der Befestigung von Sandwich-Elementen.

Eine Dichtungseinrichtung für die Durchführungen von Befestigungsmitteln, insbesondere bei Verkleidungen in der Bauindustrie, die sich für eine Verbindung der eingangs genannten Art eignen würde, ist aus der DE 25 23 685 A1 bekannt. Auch dieser Stand der Technik befasst sich mit dem Problem, dass die Befestigungsmittel die Dichtscheibe im Laufe der Zeit nicht mehr ausreichend stark gegen die Verkleidung drücken, wodurch Feuchtigkeit und Flüssigkeit durch die in der Verkleidung vorhandenen Durchführungen für die Befestigungsmittel hindurchtreten können. Die Schwächung der Abdichtung wird auf das Austrocknen von für die Stützstruktur für die Verkleidung verwendeteten Balken zurückgeführt, die sich besonders bei der Befestigung von Dachbedeckungen oder - verkleidungen in der Form von Schindeln oder Platten bemerkbar mache. Auch bei Wandverkleidungen wie zum Beispiel in Kühlräumen od. dgl., bei denen feuchtigkeitsdichte Verbindungen und Befestigungsmittel erwünscht sind, ergäben sich durch das relative Herauskommen der Befestigungsmittel solche Schwierigkeiten, dass man in manchen Fällen gezwungen sei, komplizierte und teure konstruktive Maßnahmen zu treffen, um eine vollkommen dichte Verkleidung zu erreichen. Es werde daher angestrebt, eine Abdichtungsvorrichtung zu schaffen, bei der Undichtigkeiten zwischen dem Befestigungsmittel und dem Bauteil selbst dann nicht auftreten, wenn sich das Bauteil relativ zu dem Befestigungsmittel bewegt. Meistens trete eine solche Undichtigkeit dadurch auf, dass das Befestigungsmittel nach einer gewissen Zeitspanne keinen Druck mehr auf die Dichtung ausübe, was jedoch für eine gute Abdichtung erwünscht sei. Bei dieser bekannten Dichtungseinrichtung wird die Lösung des Problems für die Durchführungen von Befestigungsmitteln von Bauteilen, insbesondere für Dach- und Wandverkleidungen an Gebäuden, mit einem festen Teil und mit einer damit in Eingriff stehenden Dichtung aus elastischem Werkstoff dadurch erreicht, dass der feste Teil einen Halteteil hat, durch den die Ausdehnung der Dichtung rechtwinklig zu der Richtung begrenzbar ist, in der ein Druck auf die Dichtung wirkt, und dass die Dichtung an der von dem festen Teil fortweisenden Seite an dem Bauteil anhaftbar ist. Es wird, mit anderen Worten, das Halteteil mit einem axial vorstehenden Flansch versehen, der die Dichtung radial außen umfasst. Dadurch wird erreicht, dass bei Druck auf die Dichtung diese nicht radial nach außen ausweichen kann, sondern vermehrten Abdichtdruck um das Befestigungselement, zum Beispiel einen Nagel, und im Bereich um die Öffnung, durch die sich das Befestigungselement erstreckt, erzeugt. Es ist anzunehmen, dass eine solche Dichtungseinrichtung bei einer Verbindung zwischen einem Profil, das eine Schwelle, ein Türrahmenteil oder ein Fensterrahmenteil ist, und einer Außenwand in einer Öffnung an einem Gebäude, auch nicht ausreichen würde, um das Eindringen von Feuchtigkeit zu verhindern, und zwar wegen der erwähnten Bewegungen, die das Profil in einem solchen Fall üblicherweise ausführt

Zum Stand der Technik zählen bereits Schrauben, die mit einer Klebstoffbeschichtung versehen sind, die hauptsächlich zum Erzielen von Losdrehsicherheit dient, zugleich aber auch für eine Abdichtung sorgt (DE 2 049 255 C, US 4 657 460 oder EP 0 483 318 B1). Solche Klebstoffbeschichtungen sind bislang aber nicht für eine Schraube eingesetzt worden, bei der ein Stützgewinde am Schaft unter dem Schraubenkopf und zwischen diesem Stützgewinde und dem Schraubenkopf ohnehin eine konische Dichtscheibe vorhanden ist, die für eine Abdichtung sorgt.

Aus der DE 19 60 604 A ist eine selbstbohrende Heftschraube bekannt, die zum Verbinden relativ dünner Bleche oder Platten ohne Zwischenraum zwischen den Blechen oder Platten vorgesehen ist. Diese bekannte Heftschraube soll auch dazu benutzt werden können eine Kegelscheiben- und Dichtscheibenkombination in einer gespannten Lage an einer Klemmfläche des Schraubenkopfes zu fixieren, wobei die normale Tendenz der Rückfederung für eine witterungsbeständige Abdichtung sorgen soll. Bei dem Einsatz dieser Heftschraube ist zwischen den Blechen oder Platten kein Zwischenraum vorgesehen, weshalb das oben genannte Problem, dass die Befestigungsmittel die Dichtscheibe im Laufe der Zeit nicht mehr ausreichend stark gegen die Verkleidung drücken, hier nicht auftreten kann.

Aus der EP 1 533 531 A1 ist eine feuchtigkeitsdichte Verschraubung bekannt, bei der ein anzubringendes Element mit Hilfe von unmittelbar in einen Werkstoff eingedrehten Schrauben festgelegt wird. Um das Eindringen von Feuchtigkeit im Bereich des Einschraubloches sicher zu vermeiden, wird vorgeschlagen, dass die Schraubengewinde wenigstens teilweise mit einer Beschichtung versehen sind, die sich beim Einschrauben am Rand des Einschraubloches ablöst, dort ansammelt und beim Anziehen der Schrauben diesen Bereich feuchtigkeitsdicht abdichtet. Diese bekannte feuchtigkeitsdichte Verschraubung ist nicht mit einer Verbindung der eingangs genannten Art vergleichbar, weil die Schraube keinen unter dem Kopf angeordneten gewindefreien Schaftabschnitt aufweist und keine um den gewindefreien Schaftabschnitt angeordnete Dichtscheibe. Die Abdichtung soll allein durch die Beschichtung des Schraubengewindes erzeugt werden.

Aus der EP 1 669 533 A2, der DE 295 02 068 U1 und der DE 295 08 741 U1 sind zwar Schrauben bekannt, die in Verbindung mit der Befestigung eines Profils oder der Befestigung an einem Profil eingesetzt werden, wofür die Schrauben neben ihrem Verankerungsgewinde zusätzlich auch ein Stützgewinde unter dem Kopf aufweisen, diese bekannten Schrauben sind jedoch ebenfalls nicht dafür vorgesehen, in Kombination mit einer Dichtscheibe eine Abdichtung im Bereich der Schraube zu erzielen.

Aufgabe der Erfindung ist es, eine Verbindung der eingangs genannten Art so auszubilden, dass sich eine wesentlich bessere und insbesondere dauerhaftere Ausbildung der Abdichtung im Bereich der Schraube erzielen lässt.

Ausgehend von einer Verbindung der eingangs genannten Art wird die Aufgabe erfindungsgemäß dadurch gelöst, dass die Dichtscheibe auf dem Profil abdichtend aufliegt und dass das Stützgewinde der Schraube mit einem Dichtmittel beschichtet ist, das axial durchgehend mindestens von einer Flankenspitze bis zur nächsten Flankenspitze reicht, auf 360° am Umfang des Stützgewindes aufgebracht ist und jedweden Raum zwischen dem Stützgewinde und einem Innengewinde der Bohrung des Profils ausfüllt und abdichtet.

Die Erfindung beruht somit auf der überraschenden Erkenntnis, dass bei einer Verbindung der eingangs genannten Art, bei der die Schraube von Haus aus mit einer konischen Dichtscheibe mit einer an der Unterseite angebrachten Elastomerschicht versehen ist, eine dauerhafte Abdichtung im Schaftbereich unter dem Kopf erzielt werden kann, wenn die Dichtscheibe abdichtend auf dem Profil aufliegt und das Stützgewinde zusätzlich mit einem Dichtmittel beschichtet ist und die Länge des gewindefreien Schaftabschnittes so klein bemessen wird, dass bei gesetzter Schraube ein durch das Stützgewinde abgestütztes Profil mit dem Stützgewinde in Gewindeeingriff ist. Dadurch ergibt sich der Vorteil, dass sich der Schaft der Schraube relativ zu dem abgestützten Profil nicht bewegen kann und dass eine zusätzlich zwischen dem Gewinde der Bohrung in dem Profil und dem Stützgewinde hergestellte Abdichtung, die durch die Dichtmittelbeschichtung des Stützgewindes bewirkt wird, auf Dauer erhalten bleibt und so eine dauerhafte Abdichtung gewährleistet. Der Gewindeeingriff zwischen der Schraube und dem Profil, der bei gesetzter Schraube dadurch gewährleistet ist, dass der gewindefreie Schaftabschnitt nur von der konischen Dichtscheibe eingenommen wird, hindert das Profil an einer Bewegung relativ zu der Schraube sowohl in radialer als auch in axialer Richtung. Kombiniert mit dem in die Gewindeverbindung zwischen Stützgewinde und Profil erfindungsgemäß eingebrachten Dichtmittel gewährleistet das eine vollkommene Abdichtung auf Dauer.

Bei der erfindungsgemäßen Verbindung ist durch die Kombination der Schraube mit dem in der Gewindeverbindung zwischen Stützgewinde und Profil vorhandenen Dichtmittel eine dauerhafte Abdichtung gewährleistet, die das Eindringen von Feuchtigkeit unter das Profil sicher und auf Dauer verhindert. Trotzdem kann der Außendurchmesser des Stützgewindes so dimensioniert werden, dass die Verbindung mittels Durchsteckmontage hergestellt werden kann, die Schraube bei der erfindungsgemäßen Verbindung also zusammen mit einem passenden Dübel durch die Bohrung in dem Profil hindurch in eine Bohrung in einer Außenwand eines Gebäudes eingeführt werden kann. Für diese Montageerleichterung muss nicht eine schwächere oder weniger dauerhafte Abdichtung in Kauf genommen werden, denn der sich beim Setzen der Schraube ergebende Gewindeeingriff zwischen Schraube und Profil in Kombination mit dem Dichtmittel hält eine vollkommene Abdichtung im Bereich der Gewindeverbindung zwischen Profil und Schraube aufrecht.

Das Auftragen des Dichtmittels von einer Flankenspitze bis zur nächsten Flankenspitze des Stützgewindes, und zwar auf 360° am Umfang desselben ist zum Erzielen der angestrebten Abdichtung ausreichend. Zweckmäßig kann aber das Dichtmittel auf das gesamte Stützgewinde aufgebracht werden. Das richtet sich nach dem Einsatzzweck der Schraube. In jedem Fall ist gewährleistet, dass bei dem Setzen der Schraube, also bei der Herstellung des Innengewindes in der Bohrung in einem Profil od. dgl. ein dünner Klebstofffilm überall in dem Gewinde verteilt wird.

Vorteilhafte Ausgestaltungen der Verbindung nach der Erfindung bilden die Gegenstände der abhängigen Ansprüche.

Wenn in einer Ausgestaltung der Verbindung nach der Erfindung das Profil mindestens teilweise hohl ist, kann das Stützgewinde der Schraube seine Funktion noch sicherer erfüllen.

Wenn in einer weiteren Ausgestaltung der Verbindung nach der Erfindung das Profil ausgeschäumt ist, kann in dem Bereich des Stützgewindes eine Abdichtung zusätzlich auch in dem Schaumkern des Profils hergestellt werden.

Wenn in einer weiteren Ausgestaltung der Verbindung nach der Erfindung das Dichtmittel ein Klebstoff ist, bewirkt es zusätzlich eine Losdrehsicherheit der Schraube. Als Dichtmittel eignet sich insbesondere auch ein mikroverkapselter Klebstoff. Beim Eindrehen des Stützgewindes in die Bohrung platzen die Mikrokapseln auf, wodurch Flüssigkunststoff freigesetzt wird und durch Reaktion mit einer zweiten Komponente, einem Härter, eine abdichtende und zugleich sichernde Klebeverbindung entsteht.

Wenn in einer weiteren Ausgestaltung der Verbindung nach der Erfindung das Stützgewinde der Schraube ein gewindeschneidendes oder -furchendes Gewinde ist, ist die Schraube einfacher montierbar und es ergibt sich stets ein spielfreier Gewindeeingriff in einer Bohrung eines Profils od. dgl., zu dessen Befestigung die Schraube eingesetzt wird.

Wenn in einer weiteren Ausgestaltung der Verbindung nach der Erfindung die Schraube im Bereich des Stützgewindes einen unrunden Querschnitt aufweist, wird das Dichtmittel in dem eine geringere Gewindehöhe aufweisenden Bereich angesammelt und von da aus als ein dünner Film auf den gesamten Gewindeumfang weitergezogen.

Wenn in einer weiteren Ausgestaltung der Verbindung nach der Erfindung das Stützgewinde einen trilobularen, mehreckigen oder nach Art eines Gleichdicks ausgeführten Querschnitt aufweist, sind in jedem Fall das Erzielen einer optimalen Abdichtung im Bereich des Stützgewindes und die Losdrehsicherheit der Schraube gewährleistet.

Ausführungsbeispiele der Erfindung werden im Folgenden unter Bezugnahme auf die Zeichnungen näher beschrieben. Es zeigt
- Fig. 1: eine Verbindung nach der Erfindung am Beispiel eines im Querschnitt gezeigten Flachprofils, und
- Fig. 2: eine Verbindung nach der Erfindung am Beispiel eines im Querschnitt gezeigten Hohlprofils.

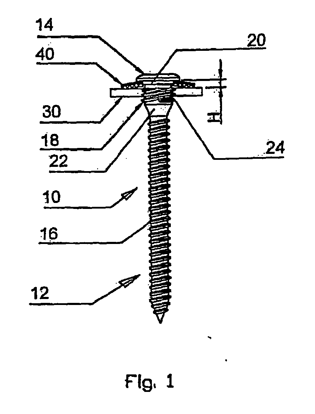

Fig. 1 zeigt eine erfindungsgemäße Verbindung einer einer insgesamt mit 10 bezeichneten Schraube mit einem im Querschnitt dargestellten Flachprofil 30.

Die Schraube hat einen Schaft 12 und einen Schraubenkopf 14. Unter dem Schraubenkopf 14 ist ein Stützgewinde 18 angeordnet, das einen größeren Außendurchmesser als das Verankerungsgewinde 16 hat. Zwischen dem Schraubenkopf 14 und dem Stützgewinde 18 ist ein gewindefreier Schaftabschnitt 20 vorhanden, der in der axialen Richtung der Schraube 10 eine Länge H hat. Unter dem Schraubenkopf 14 ist um den gewindefreien Schaftabschnitt 20 eine konische Dichtscheibe 40 angeordnet. Die konische Dichtscheibe 40 besteht aus einem Metallrücken und einer an dessen Unterseite angebrachten Elastomerschicht, wie es in Fig. 1 zu erkennen ist. Der gewindefreie Schaftabschnitt 20 ist im Durchmesser abgestuft ausgebildet. Ein oberer Teil größeren Durchmessers des gewindefreien Schaftabschnittes 20 ist dem Durchmesser des Loches in der konischen Dichtscheibe 40 angepasst, die somit auf der Schraube 10 kein nennenswertes radiales Spiel hat. Ein unterer Teil des gewindefreien Schaftabschnittes 20 hat einen kleineren Durchmesser, der gleich dem Kerndurchmesser des Stützgewindes 18 ist. An das Stützgewinde 18 schließt sich in Fig. 1 nach unten hin ein konisch zulaufender weiterer gewindefreier Schaftabschnitt 22 an, der in den Schaftabschnitt übergeht, welcher das Verankerungsgewinde 16 trägt.

Das Stützgewinde 18 ist mit einem Dichtmittel 24 beschichtet, welches in dem hier dargestellten Ausführungsbeispiel das gesamte Stützgewinde bedeckt. Es würde ausreichen, wenn das Dichtmittel axial durchgehend mindestens von einer Flankenspitze bis zur nächsten Flankenspitze des Stützgewindes 18 reicht und auf 360° am Umfang des Stützgewindes aufgebracht ist. Die Länge H des gewindefreien Schaftabschnittes 20 ist nicht größer als die von der konischen Dichtscheibe 40 eingenommene Länge des Schaftes 12.

Das Stützgewinde 18 ist ein gewindeschneidendes oder -furchendes Gewinde. Für das Setzen der Schraube 10 wird zuvor in dem Flachprofil 30 eine Bohrung hergestellt, deren Durchmesser dem Kerndurchmesser des Stützgewindes 18 entspricht. Wenn die Schraube mit dem Stützgewinde 18 in das Flachprofil 30 eingeschraubt wird, schneidet oder furcht sie mit ihrem Stützgewinde 18 ein entsprechendes Gegengewinde in der Bohrung des Flachprofils 30. Dadurch, dass die Länge des gewindefreien Schaftabschnittes 20 nicht größer ist als die von der konischen Dichtscheibe 40 eingenommene Länge H des Schaftes 12, greift das Stützgewinde 18 bereits mit seinem in Fig.1 oberen Gewindegang in das Flachprofil 30 ein, um dieses abzustützen. Es ist zu erkennen, dass das Flachprofil 30 wesentlich dicker sein könnte, als es in Fig. 1 gezeigt ist.

Die Schraube 10 weist im Bereich des Stützgewindes 18 einen unrunden Querschnitt auf, beispielshalber einen trilobularen, mehreckigen oder nach Art eines Gleichdicks ausgeführten Querschnitt. Das hat den vorteilhaften Effekt, dass zwischen den erhöhten Teilen des Stützgewindes 18 jeweils eine Tasche oder ein Reservoir für ein Dichtmittel vorhanden ist, das beim Eindrehen des Stützgewindes 18 in die Bohrung in dem Flachprofil 30 mitgezogen wird und so eine optimale Abdichtung und eine optimale Losdrehsicherheit ermöglicht.

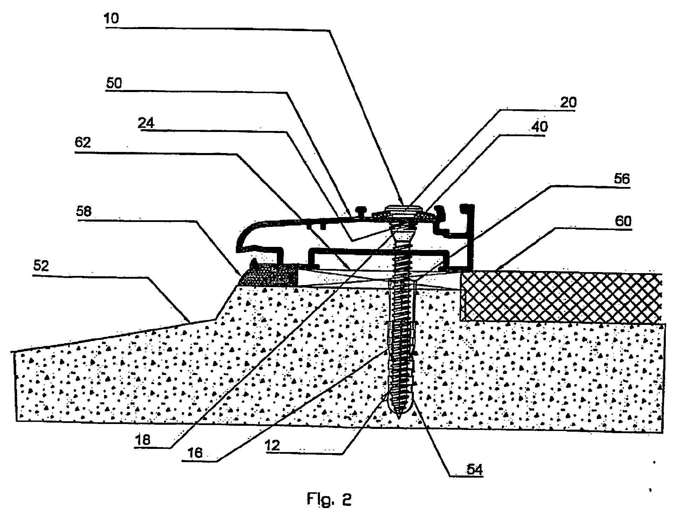

Fig. 2 zeigt eine erfindungsgemäße Verbindung der Schraube 10 mit einem im Querschnitt dargestellten Hohlprofil 50, das in vorliegendem Fall eine Türschwelle ist, aber ebenso gut ein Tür- oder Fensterrahmenteil sein könnte. Die Schraube 10 stellt die Verbindung zwischen dem Hohlprofil 50 und einer Außenwand 52 in einer Öffnung, hier einer Türöffnung, an einem Gebäude her. In die Außenwand 52 ist zuvor ein Loch 54 für einen Dübel 56 gebohrt worden. Das Hohlprofil liegt einerseits auf einem Dichtprofil 58 und andererseits auf einem Bodenbelag 60 auf. Ein Zwischenraum zwischen dem Dichtprofil 58 und dem Bodenbelag 60 oberhalb der Außenwand 52 ist mit einem Wärmedämmmaterial 62 ausgefüllt. Das Hohlprofil 50 könnte auch nur teilweise hohl ausgebildet sein. Die Schraube 10 hat den in Fig. 1 gezeigten und mit Bezug auf Fig. 1 beschriebenen Aufbau und braucht daher hier nicht erneut beschrieben zu werden.

Zum Herstellen der erfindungsgemäßen Verbindung nach Fig. 2 wird das Hohlprofil 50, in dessen beide Schenkel zwei Bohrungen gleichen Durchmessers übereinander hergestellt worden sind, in die in Fig. 2 gezeigte Position gebracht. Der Durchmesser der beiden Bohrungen ist so bemessen, dass die Schraube 10 mit dem vormontierten Dübel 54 durch die Bohrungen hindurchgesteckt und so der Dübel 56 in das Loch 54 eingeführt werden kann. Das Loch 54 für den Dübel 56 wird zweckmäßig durch die beiden vorgenannten Bohrungen hindurch erst gebohrt, nachdem das Hohlprofil 50 in seine richtige Position gebracht worden ist. Die Schraube 10 wird dann in den Dübel 56 eingeschraubt, bis sie die in Fig. 2 gezeigte Position erreicht. Dabei stellt sie in der oberen Bohrung in dem oberen Schenkel des Hohlprofils 50 ein Gegengewinde her wie in dem Flachprofil 30 in Fig. 1. Wenn sie die in Fig. 2 gezeigte Position erreicht, dichtet die konische Dichtscheibe 40 den Bereich um die obere Bohrung in dem oberen Schenkel des Hohlprofils 50 ab und wird dabei mit der nach innen vorstehenden Dichtlippe der Elastomerschicht in dem gewindefreien Schaftabschnitt 20 abdichtend gegen den Schaft 12 gedrückt. Zusätzlich dichtet das Dichtmittel 24 die Gewindeverbindung zwischen dem Stützgewinde 18 und dem Innengewinde der oberen Bohrung ab und hält aufgrund dieses Gewindeeingriffes den oberen Schenkel des Hohlprofils 50 fest, so dass das Hohlprofil sich relativ zu der Schraube 10 weder axial noch radial bewegen kann. Damit wird die angestrebte Abdichtung zwischen der Schraube 10 und dem Hohlprofil 50 erreicht und auf Dauer gesichert.

Zusätzlich kann das Hohlprofil 50 ausgeschäumt sein. Dadurch wird der obere Schenkel des Hohlprofils 50 zusätzlich abgestützt. Außerdem ergibt sich eine zusätzliche Abdichtung zwischen der Schraube 10 und dem Schaumkern (nicht dargestellt) des Hohlprofils 50 durch einen zusätzlichen Gewindeeingriff zwischen dem Stützgewinde 18 und dem Schaumkern.

### Bezugszeichenliste

- 10: Schraube
- 12: Schaft
- 14: Schraubenkopf
- 16: Verankerungsgewinde
- 18: Stützgewinde
- 20: gewindefreier Schaftabschnitt
- 22: gewindefreier Schaftabschnitt
- 24: Dichtmittel
- 30: Flachprofil
- 40: Dichtscheibe
- 50: Hohlprofil
- 52: Außenwand
- 54: Loch
- 56: Dübel
- 58: Dichtprofil
- 60: Bodenbelag
- 62: Wärmedämmmaterial
- H: Länge des gewindefreien Schaftabschnittes

## Patentansprüche

1. Verbindung zwischen einem Profil (30, 50), das eine Schwelle, ein Türrahmenteil oder ein Fensterrahmenteil ist, und einer Außenwand (52) in einer Öffnung an einem Gebäude, bestehend aus mindestens einer Schraube (10) mit einem Verankerungsgewinde (16) und einer unter dem Kopf (14) um einen gewindefreien Schaftabschnitt (20) angeordneten Dichtscheibe (40) und mindestens je einer Bohrung in dem Profil (30, 50) und der Außenwand, in die die Schraube eingedreht ist,
wobei die Schraube (10) zusätzlich ein Stützgewinde (18) am Schaft (12) unter dem Schraubenkopf (14) aufweist,
wobei die Dichtscheibe (40) eine konische Dichtscheibe aus einem Metallrücken und einer an dessen Unterseite angebrachten Elastomerschicht ist und wobei die axiale Länge (H) des gewindefreien Schaftabschnittes (20) nicht größer ist als die von der Dichtscheibe (40) eingenommene Länge des Schaftes (12),
**dadurch gekennzeichnet, dass** die Dichtscheibe (40) auf dem Profil (30, 50) abdichtend aufliegt und dass das Stützgewinde (18) der Schraube (10) mit einem Dichtmittel (24) beschichtet ist, das axial durchgehend mindestens von einer Flankenspitze bis zur nächsten Flankenspitze reicht, auf 360° am Umfang des Stützgewindes (18) aufgebracht ist und jedweden Raum zwischen dem Stützgewinde (18) und einem Innengewinde der Bohrung des Profils (30, 50) ausfüllt und abdichtet.

2. Verbindung nach Anspruch 1, **dadurch gekennzeichnet, dass** das Profil (50) mindestens teilweise hohl ist.

3. Verbindung nach Anspruch 1 oder 2, **dadurch gekennzeichnet, dass** das Profil (50) ausgeschäumt ist.

4. Verbindung nach einem der vorhergehenden Ansprüche, **dadurch gekennzeichnet, dass** das Dichtmittel (24) ein Klebstoff ist.

5. Verbindung nach einem der vorhergehenden Ansprüche, **dadurch gekennzeichnet, dass** das Stützgewinde (18) ein gewindeschneidendes oder -furchendes Gewinde ist.

6. Verbindung nach einem der vorhergehenden Ansprüche, **dadurch gekennzeichnet, dass** die Schraube (10) im Bereich des Stützgewindes (18) einen unrunden Querschnitt aufweist.

7. Verbindung nach Anspruch 6, **dadurch gekennzeichnet, dass** das Stützgewinde (18) einen trilobularen, mehreckigen oder nach Art eines Gleichdicks ausgeführten Querschnitt aufweist.

## Claims

1. A connection between a profile (30,50), which is a sill, a door frame part or a window frame part, and an outer wall (52) in a opening in a building, comprising at least one screw (10) with an anchoring thread (16) and a sealing washer (4), which is disposed under the head (14) around a threadless shank portion (20), and at least one respective bore in the profile (30,50) and the outer wall, into which the screw is driven,
wherein the screw (10) additionally has a support thread (18) on the shank (12 below the screw head (14),
wherein the sealing washer (40) is a conical sealing washer comprising a metal back and an elastomer layer applied to its underside, and wherein the axial length (H) of the threadless shank portion (20) is not greater than the length of the shank (12) occupied by the sealing washer (40),
**characterised in that** the sealing washer (40) bears fluidtightly on the profile (30,50), and **in that** the support thread (18) of the screw (10) is coated with a sealant (24) which extends axially continuously at least from one flank crest up to the next flank crest, is applied at 360° to the circumference of the support thread (18), and fills and seals any space between the support thread (18) and an internal thread of the bore in the profile (30,50).

2. A connection according to Claim 1, **characterised in that** the profile (50) is at least partly hollow.

3. A connection according to Claim 1 or 2, **characterised in that** the profile (50) is foam-filled.

4. A connection according to any one of the preceding Claims, **characterised in that** the sealant (24) is an adhesive.

5. A connection according to any one of the preceding Claims, **characterised in that** the support thread (18) is a thread-cutting or a thread-forming screw-thread.

6. A connection according to any one of the preceding Claims, **characterised in that** the screw (10) is of non-circular cross-section in the vicinity of the support thread (18).

7. A connection according to Claim 6, **characterised in that** the support thread (18) is of trilobular, polygonal cross-section or of constant-diameter type cross-section.

## Revendications

1. Liaison entre un profilé (30, 50) qui est un seuil, un encadrement de porte ou un châssis de fenêtre et une paroi extérieure (52) dans l'ouverture d'une construction, comprenant :
- au moins une vis (10) avec un filetage d'ancrage (16) et une rondelle d'étanchéité (40) installées sous la tête (14) autour d'un segment de tige (20) sans filetage et au moins un perçage dans le profilé (30, 50) et dans la paroi extérieure recevant la vis,
* la vis (10) ayant en plus un filetage d'appui (18) sur la tige (12) sous la tête de vis (14),
* la rondelle d'étanchéité (40) étant une rondelle conique formée d'un dos en métal et d'une couche d'élastomère sur le côté inférieur du dos, et
* la longueur axiale (H) du segment de tige sans filetage (20) n'est pas supérieure à la longueur de la tige (12) occupée par la rondelle d'étanchéité (40),
liaison **caractérisée en ce que**
- la rondelle d'étanchéité (40) est appliquée de manière étanche sur le profilé (30, 50), et
- le filetage d'appui (18) de la vis (10) est revêtu d'un moyen d'étanchéité (24) qui s'étend axialement de manière continue au moins d'une pointe de flanc à la pointe de flanc suivante sur 360° à la périphérie du filetage d'appui (18) et occupe tout l'espace entre le filetage d'appui (18) et le filetage intérieur du perçage du profilé (30, 50) en le remplissant et en le rendant étanche.

2. Liaison selon la revendication 1,
**caractérisée en ce que**
le profilé (50) est au moins en partie creux.

3. Liaison selon la revendication 2,
**caractérisée en ce que**
le profilé (50) est rempli de mousse.

4. Liaison selon l'une des revendications précédentes,
**caractérisée en ce que**
le moyen d'étanchéité (24) est une colle.

5. Liaison selon l'une des revendications précédentes,
**caractérisée en ce que**
le filetage d'appui (18) est un filetage auto-taraudant ou taillant.

6. Liaison selon l'une des revendications précédentes,
**caractérisée en ce que**
la vis (10) à une section non circulaire dans la zone du filetage d'appui (18).

7. Liaison selon la revendication 6,
**caractérisée en ce que**
le filetage d'appui (18) a une section à trois lobes, une section polygonale ou une section de type épaisseur constante.
